# EUROPEAN PATENT APPLICATION

(11) **EP 4 723 613 A1**
(43) Date of publication of application: **08.04.2026**
(21) Application number: 25201072.3
(22) Date of filing: 09.09.2025
(51) Int. Cl.: H04N 1/60

(54) **CONTROL METHOD, COMPUTER PROGRAM, STORAGE MEDIUM, AND INFORMATION PROCESSING APPARATUS**

(30) Priority: 03.10.2024 JP 2024174103
(71) Applicant: Canon Kabushiki Kaisha, Tokyo, 146-8501 (JP)
(72) Inventor: YAMADA, Michihiko, Tokyo, 146-8501 (JP); SHINDO, Yukihiro, Tokyo, 146-8501 (JP); NAKASHIO, Hidekazu, Tokyo, 146-8501 (JP); NAKATANI, Yuki, Tokyo, 146-8501 (JP); KIMURA, Takumi, Tokyo, 146-8501 (JP)
(74) Representative: Canon Europe Limited

(57) **Abstract**

It is difficult to know a second color having an allowable color difference with a designated color being as a reference. A control method for performing color verification of a color printed by a printing apparatus includes receiving a designation of a first color, receiving an allowable color difference for the color verification, and displaying a second color having the allowable color difference on a display unit with the first color with the designation thereof received being as a reference, based on the first color with the designation and the allowable color difference.

## Description

### Technical Field

The present disclosure relates to a control method, a computer program, a storage medium, and an information processing apparatus.

### BACKGROUND

In general, color management is periodically performed for commercial color printers to secure a certain color reproductivity.

In the color management, a color (target color) to be a target specified by a standard such as International Organization for Standardization (ISO) standards, and a color (printed color) actually printed by a printer are compared to check whether the color accuracy satisfies an acceptance criterion (allowable value or allowable color difference).

In a case where the color accuracy does not satisfy the allowable value, regenerating a print profile or performing a correction processing using a color correction function of the printer is necessary to improve the color accuracy, but since these works require time and effort, it is necessary to perform these works efficiently.

Japanese Patent Laid-open Publication No. 2022-15874 describes a color accuracy verification technique of printing a designated color patch at a designated position on a sheet, performing a color measurement, and comparing the measured result with a target value of the designated color patch. Japanese Patent Laid-open Publication No. 2022-15874 further describes that an allowable range (hereinbelow, referred to an allowable value) for each designated color selected by a user can be set.

However, the setting of the above-described allowable value has following issues. For example, in the color accuracy verification, when a user independently determines an allowable value and performs a color accuracy verification, the user needs to input a numerical value. It is easy for the user to input the numerical value, but it is difficult to intuitively know up to how much color difference is actually allowed.

### SUMMARY

The present disclosure is made in view of at least one of the issues described above, and the present disclosure is directed to a system that enables a user to intuitively know how much color difference is allowed when an allowable value is to be determined.

The present disclosure in its first aspect provides a control method as specified in claim 1. Optional features of the first aspect are specified in claims 2 to 7. These optional features of the first aspect are also optional features of the other aspects of the present invention.

The present disclosure in its second aspect provides a computer program as specified in claim 8. The present disclosure in its third aspect provides a storage medium as specified in claim 9.

The present disclosure in its fourth aspect provides an information processing apparatus as specified in claim 10. Optional features of the fourth aspect are specified in claims 11 to 15. These optional features of the fourth aspect are also optional features of the other aspects of the present invention.

Features of the present disclosure will become apparent from the following description of embodiments with reference to the attached drawings. The following description of embodiments is described by way of example.

### BRIEF DESCRIPTION OF THE DRAWINGS

Fig. 1 is a conceptual diagram illustrating an overall configuration of a color accuracy verification system according to an embodiment.
Figs. 2A, 2B, and 2C are diagrams illustrating examples of patch signal values and color characteristics of a color accuracy verification chart according to an embodiment.
Fig. 3 is a block diagram illustrating hardware configurations of a color accuracy verification apparatus and a control apparatus according to an embodiment.
Fig. 4 is a block diagram illustrating a primary functional configuration of the color accuracy verification apparatus according to an embodiment.
Fig. 5 is a sequence diagram illustrating a processing flow of the color accuracy verification system according to an embodiment.
Figs. 6A to 6O-2 are diagrams each illustrating an example of a display unit according to an embodiment.
Fig. 7A and 7B are flowcharts illustrating an allowable value detail setting flow performed in step S502 in Fig. 5.
Fig. 8 is a table illustrating color measurement conditions corresponding to a color certification according to an embodiment.
Fig. 9 is a table illustrating allowable values for a color certification according to an embodiment.
Fig. 10 is an arithmetic expression for calculating a color difference ΔE according to an embodiment.
Fig. 11 is an arithmetic expression for calculating a color value separate from a designated color value by a predetermined value according to an embodiment.
Fig. 12 is an arithmetic expression for calculating a color value separate from a designated color value by a predetermined value according to an embodiment.

### DESCRIPTION OF THE EMBODIMENTS

Hereinbelow, embodiments of the present disclosure will be described in detail with reference to the attached drawings. Note that the embodiments described below are not intended to limit the scope of the present disclosure as defined by the claims. In the embodiments, a plurality of features is described, but not all the features are necessarily essential. Further, in the attached drawings, the same or similar components are assigned the same reference numbers, and the redundant descriptions thereof are omitted.

### [First Embodiment]

In a first embodiment, a flow of designating a test content (allowable value) at the time of color accuracy verification test registration, in a case where a color accuracy verification is performed using an allowable value independently defined by a user will be described.

More specifically, colors within an allowable range which a user can allow are calculated using a designated color and an allowable value to display the colors within the allowable range. Alternatively, colors within an allowable range which a user can allow are calculated using a designated color and an allowable value to display the designated color and the colors within the allowable range side by side.

As an example, patches with an allowable difference for the designated color are displayed based on the allowable color difference (allowable value) for the designated color. Alternatively, the designated color and the patches with the allowable difference for the designated color are displayed side by side based on the allowable color difference (allowable value) for the designated color.

In this way, the allowable color difference for the designated color can be easily recognized visually, and the allowable value can be easily designated irrespective of experience and knowledge. In particular, the allowable value can be more easily designated if the designated color and the colors (patches) with the allowable color difference for the designated color are displayed side by side.

This flow will be described below.

### <System Configuration>

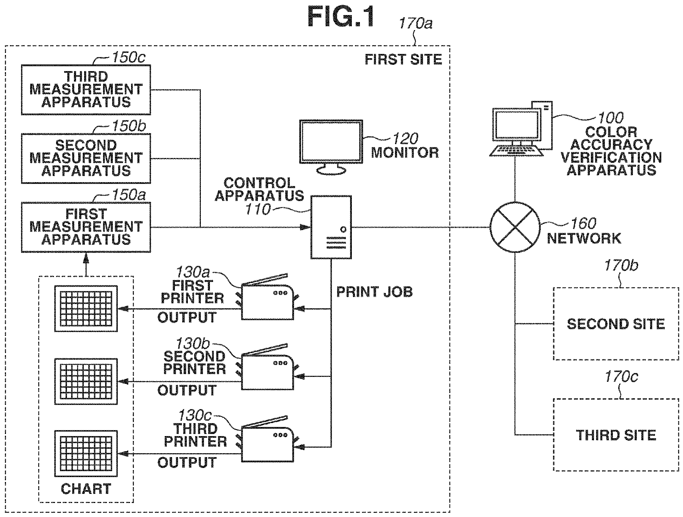

First, with reference to Fig. 1, a configuration example of a color accuracy verification system according to the present embodiment will be described. When a color accuracy verification is performed in the color accuracy verification system, first, a predetermined chart is printed out from a verification target printer. The printed-out chart is referred to as a printed product. Next, color patches on the printed-out chart are measured by a measurement apparatus, and the obtained colorimetric data (color patch colorimetric information) is transmitted to a color accuracy verification apparatus 100.

Then, the color accuracy verification apparatus 100 checks a difference (color accuracy) between the printed color and the target color. In addition, the color patches arranged on the chart are also referred to as a color chart or color samples, and are simply referred to as "patches" in the present specification.

As illustrated in Fig. 1, in the color accuracy verification system, the color accuracy verification apparatus 100 is connected with a first site 170a, a second site 170b, and a third site 170c via a network 160. The first site 170a includes a control apparatus 110, a monitor 120, a first printer 130a, a second printer 130b, a third printer 130c, a first measurement apparatus 150a, a second measurement apparatus 150b, and a third measurement apparatus 150c. Further, similar to the first site 170a, each of the second site 170b and the third site 170c includes a control apparatus, a monitor, printers, and measurement apparatuses. Hereinbelow, a relationship between the first site 170a and the color accuracy verification apparatus 100 will be described as an example.

The color accuracy verification apparatus 100 compares a color serving as a target (target color) defined in advance, and a color actually printed by a printer (printed color) to verify whether the color accuracy satisfies an acceptance criterion (allowable value or allowable color difference). The color accuracy verification apparatus 100 is communicably connected with the control apparatus 110 via the network 160.

The control apparatus 110 is communicably connected with the first printer 130a to the third printer 130c in the first site 170a via a communication network such as an intranet, and manages the color accuracy of each of the first printer 130a to the third printer 130c in an integrated manner, in addition to giving a print instruction to each printer. Further, as to the print instruction, for example, the control apparatus 110 can receive a print job from a client terminal (not illustrated), divide the print job into predetermined units (e.g., units of copies or units of pages), and issue print instructions to the plurality of printers to print the print job in a distributed manner.

The print job includes a page description language (PDL) data portion that describes rendering commands for objects with various attribute such as a text, a graphic, and a picture in page units, and print setting information designating print conditions such as a sheet size, a sheet type, and two-sided/one-sided printing. The required printing time and the print waiting time can be reduced by instructing the plurality of printers to print one print job in a divided manner.

The monitor 120 is connected with the control apparatus 110 and displays various kinds of user interface (UI) screens.

Each of the first printer 130a to the third printer 130c prints a color image on a sheet based on a print job received from the control apparatus 110, using, for example, an electrophotographic process technique. Each of the first printer 130a to the third printer 130c may be a monochrome printer, or may be a printer based on other image forming techniques such as an inkjet. Further, each of the first printer 130a to the third printer 130c may be a multifunction peripheral having a copy function and a facsimile (FAX) function, in addition to the print function.

Each of the first measurement apparatus 150a to the third measurement apparatuses 150c is a spectrometer that measures a color value of a target object based on a reflection ratio or a transmission ratio of visible light having a wavelength of approximately 400 nm to 700 nm. The first measurement apparatus 150a to the third measurement apparatuses 150c are provided, for example, in each of the sites, to obtain colorimetric data by converting the wavelength obtained from each of the patches of the chart printed out from each the first printer 130a to the third printer 130c into a value, for example, in an L*a*b* color space or an XYZ color space.

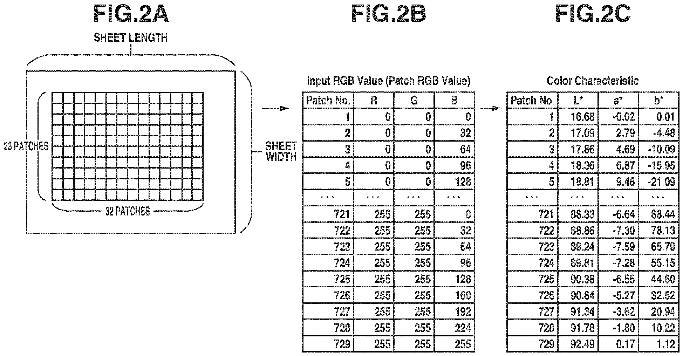

Fig. 2A is an example of a chart, and Fig. 2B illustrates a table of target color values (RGB values) defined in the RGB color space corresponding to respective patches (patch numbers 1 to 729) of the chart.

Each of the first measurement apparatus 150a to the third measurement apparatus 150c is a measurement apparatus including a line sensor or an area sensor for scanning the chart.

For example, a measurement apparatus of a document automatic reading type employing the sheet-through method can perform the measurement after pre-scanning the chart with a built-in line sensor to detect the position of each of the patches to be measured. Further, if the measurement apparatus can automatically feed sheets to perform continuous measurements, the measurement apparatus can perform the measurement after pre-scanning the chart with a built-in area sensor to detect the position of each of the patches to be measured.

A portable type (handy type) measurement apparatus can also be used, but in this case, a scanner for scanning the chart needs to be externally connected to the control apparatus 110. The measurement apparatus of a document automatic reading type employing the sheet-through method is connected to the control apparatus 110 via, for example, a universal serial bus (USB), to measure the color value of each patch on the chart printed out from the target printer, and colorimetric data as illustrated in Fig. 2C is obtained. The obtained colorimetric data is transmitted to the color accuracy verification apparatus 100 via the control apparatus 110.

Further, in a case where the color accuracy verification apparatus 100 is provided in one of the first site 170a to the third site 170c, the color accuracy verification apparatus 100 and the one measurement apparatus may be directly connected, to enable the color accuracy verification apparatus 100 to obtain the colorimetric data not via the control apparatus 110.

For example, the network 160 is a local area network (LAN), the Internet, an intranet, or the like, and may be wired or wireless network.

Each of the first site 170a to the third site 170c corresponds to a location or the like of a printing company in which the target printer is installed. For example, the first site 170a is a printing site in Tokyo, the second site 170b is a printing site in Osaka, and the third site 170c is a printing site in Fukuoka.

In addition, the configuration of the color accuracy verification system illustrated in Fig. 1 is just an example, and the configuration of the number of sites, and the configuration of the apparatuses in each site can be appropriately changed. For example, the color accuracy verification apparatus 100 may be directly connected with the control apparatus 110 or the first measurement apparatus 150a to the third measurement apparatus 150c via a communication network such as an intranet to manage the color accuracy of each of the plurality of the printers (first printer 130a to third printer 130c).

Further, for example, an information processing apparatus including both functions of the color accuracy verification apparatus 100 and the control apparatus 110 may be provided in each site, and the information processing apparatus may manage the color accuracy of a plurality of printers in each site.

### <Hardware Configuration of Color Accuracy Verification Apparatus/Control Apparatus>

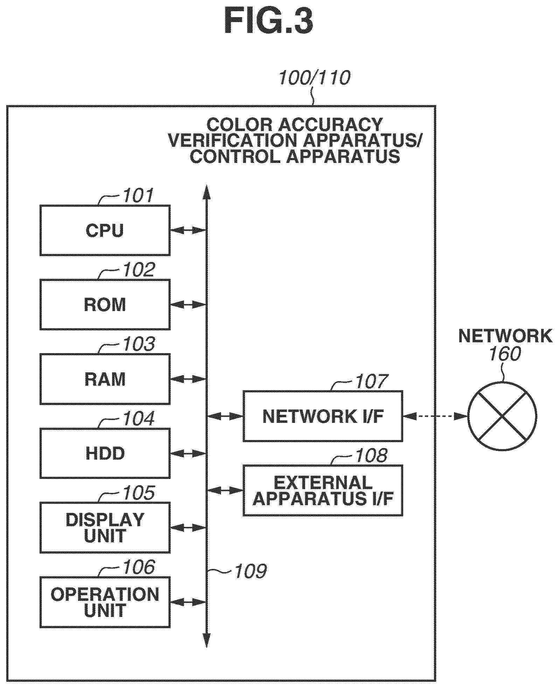

Next, with reference to Fig. 3, a hardware configuration of the information processing apparatus according to the present embodiment will be described. The information processing apparatus according to the present embodiment corresponds to at least one of the color accuracy verification apparatus 100 and the control apparatus 110 described above, and can be implemented by, for example, a general-purpose notebook/desktop type personal computer (PC), or a tablet terminal. In addition, the color accuracy verification apparatus 100 and the control apparatus 110 may be integrally configured.

Accordingly, each of the color accuracy verification apparatus 100 and the control apparatus 110 is an example of the information processing apparatus.

Each of the color accuracy verification apparatus 100 and the control apparatus 110 includes a central processing unit (CPU) 101, a read only memory (ROM) 102, a random access memory (RAM) 103, a hard disk drive (HDD) 104, a display unit 105, an operation unit 106, a network interface (I/F) 107, and an external apparatus I/F 108. Above-described components 101 to 108 are connected so as to be able to mutually transmit and receive data via a system bus 109.

The CPU 101 is an arithmetic operation apparatus to control the entire apparatus, and performs image processing based on a program stored in the ROM 102. The ROM 102 is a read only memory to store a boot program, a processing program, character data, character code information, and the like. The RAM 103 is a random access memory used as a work memory when the CPU 101 executes various kinds of programs.

Further, the RAM 103 is used as a data storage area for image files received via the network I/F 107. The HDD 104 is used for storing results of the calculation processing executed by the CPU 101, various kinds of programs, various kinds of information files, and the like. The display unit 105 is, for example, a liquid crystal display to display a UI screen used for making various settings, and confirming apparatus states.

The operation unit 106 is configured of a keyboard, buttons, and the like, and is used by a user for inputting or resetting various setting values. The network I/F 107 is an interface for connecting the apparatus to the network 160. Via the network I/F 107, each of the color accuracy verification apparatus 100 and the control apparatus 110 can transmit and receive various kinds of information to and from an external apparatus.

The external apparatus I/F 108 is an interface to connect an external apparatus (e.g., first measurement apparatus 150a to third measurement apparatus 150c) thereto via a communication bus such as USB.

### <Software Configuration of Color Accuracy Verification Apparatus>

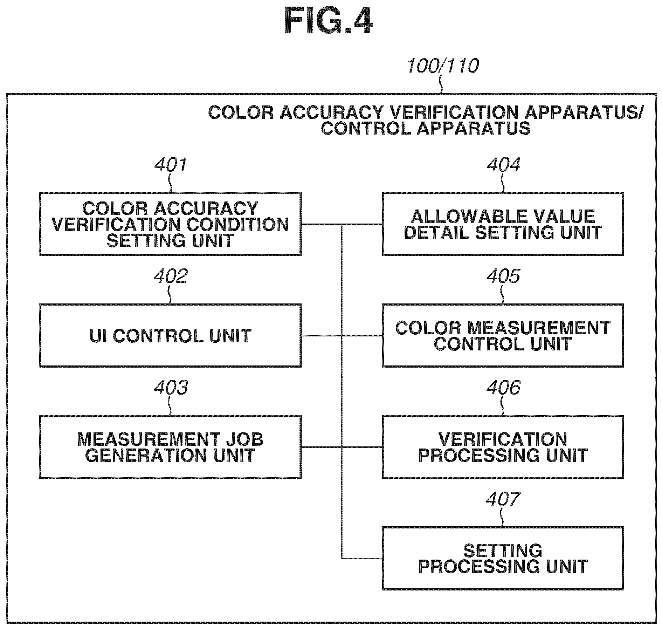

Next, with reference to Fig. 4, a software configuration of the information processing apparatus (color accuracy verification apparatus 100 and control apparatus 110) will be described. Here, only primary functional configurations in the present disclosure will be described. Thus, it is not intended to exclude other configurations.

Each of the color accuracy verification apparatus 100 and the control apparatus 110 includes a color accuracy verification condition setting unit 401, a UI control unit 402, a measurement job generation unit 403, an allowable value detail setting unit 404, a color measurement control unit 405, a verification processing unit 406, and a setting processing unit 407. Each of these functional units is implemented by the CPU 101 executing a predetermined program. Hereinbelow, each of the functional units will be described.

The color accuracy verification condition setting unit 401 registers a chart on which various color patches each corresponding to a target color value are arranged, a printer to be subjected to a color accuracy verification, a measurement apparatus and color measurement conditions used for the color accuracy verification, allowable values for the color accuracy verification, and the like, for each type of the color accuracy verification.

More specifically, the registration target chart is stored in the HDD 104 in a state where the image data is associated with the information (chart configuration information) indicating a chart configuration such as the number of patches and the sizes of the patches in the chart.

The chart is roughly classified into a predefined chart compliant with a certain standard such as International Standard Organization (ISO) standards, and a custom chart defined independently by a user. The predefined chart is registered in advance before a use start time, for example, at a time when a color accuracy verification program is installed.

The custom chart is registered at any timing based on a user's input via the operation unit 106. As the printer to be subjected to the color accuracy verification, a printer from among the first printer 130a, the second printer 130b, and the third printer 130c, which are connected to the control apparatus 110, is registered. A measurement apparatus used for the color accuracy verification is registered from among the first measurement apparatus 150a, the second measurement apparatus 150b, and the third measurement apparatus 150c.

As the color measurement condition used when the accuracy verification is performed, a color measurement condition defined in JapanColor certification compliant with ISO standards is registered. Similarly, as the allowable value when the color accuracy verification is performed, an allowable value of JapanColor certification compliant with ISO standards is registered.

The allowable value is a value used for checking whether the color accuracy satisfies an acceptance criterion (allowable value or allowable color difference) by comparing a defined color to be a target (target color) and a color (printed color) actually printed by the printer. For example, in a case where the determination is performed based on a difference between a color value (target value) of the target color and a color value (measured value) of the printed color, a color difference value is registered as an allowable value, and in a case where a color difference value is within the allowable value, the color accuracy is determined to have satisfied the acceptance criterion (allowable value or allowable color difference).

In addition, when the color accuracy verification is performed, a color accuracy verification starts when a user selects a color accuracy verification condition from among the color accuracy verification conditions registered by the color accuracy verification condition setting unit 401, and the measurement job generation unit 403 generates the measurement job.

The UI control unit 402 performs display control of the UI screen for a user to confirm the state of each apparatus in the color accuracy verification system, to input or select various setting values, to give an instruction to start various kinds of processing, and the like. The UI screen to be displayed will be described below.

The measurement job generation unit 403 selects a plurality of color accuracy verification tests for the color accuracy verification from among the color accuracy verification conditions registered by the user via the color accuracy verification condition setting unit 401, to generate a measurement job. Then, a chart is generated based on the chart configuration information corresponding to the selected color accuracy verification tests.

The allowable value detail setting unit 404 sets an allowable value for each of the patch color values in the chart registered by the color accuracy verification condition setting unit 401. The color measurement control unit 405 pre-scans the chart when the colors of the chart are measured, and executes the color measurement of the chart.

The verification processing unit 406 executes the verification processing to verify whether the color accuracy of the target printer satisfies the acceptance criterion (allowable value or allowable color difference), using the colorimetric data received from the first measurement apparatus 150a.

The setting processing unit 407 sets various kinds of parameters related to the verification processing, based on the user's selection or the like via the predetermined UI screen.

### <Processing Flow of Entire System>

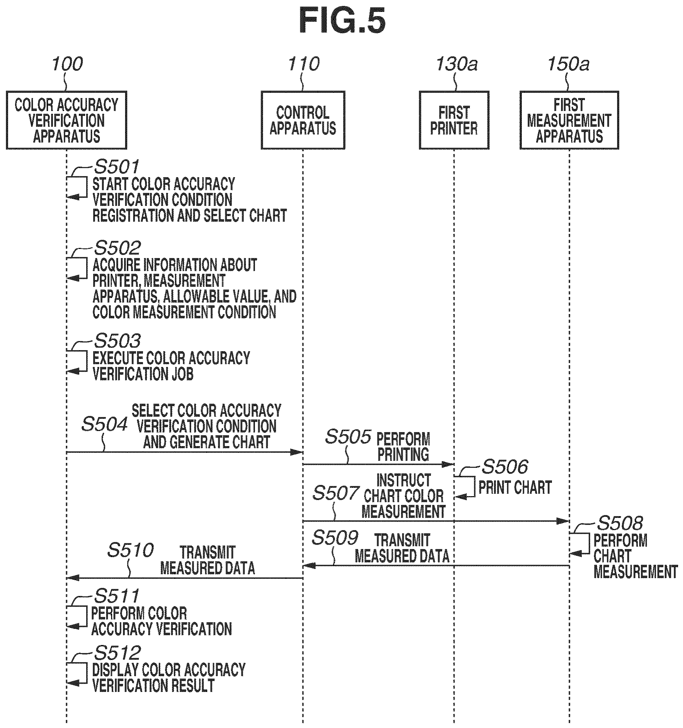

Next, with reference to Fig. 5, a processing sequence executed when the color accuracy verification is performed in the color accuracy verification system according to the present embodiment will be described.

In the processing sequence described below, assume a case where a plurality of color accuracy verifications of the first printer 130a and the second printer 130b is performed using the first measurement apparatus 150a by outputting a plurality of charts from the first printer 130a and the second printer 130b. Further, the various kinds of the operation screens described below are described using examples displayed on the display unit 105 of the color accuracy verification apparatus 100, but it is not limited thereto, and the operation screens may be displayed on the display unit 105 of the control apparatus 110, or on another display unit.

In step S501, the color accuracy verification condition setting unit 401 starts registering a color accuracy verification condition based on a user's input.

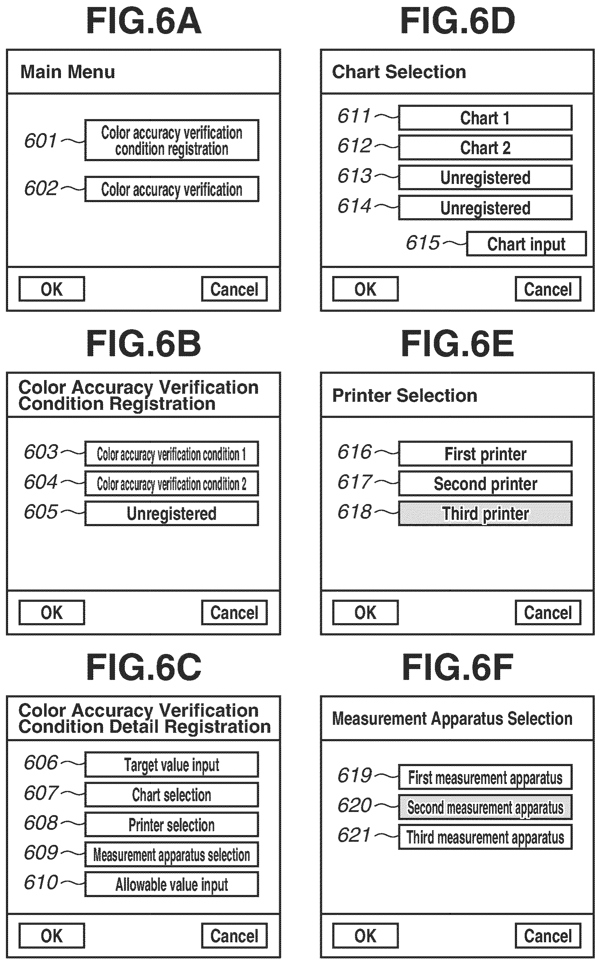

When a user who wants to register the color accuracy verification condition presses a color accuracy verification condition registration button 601 on a main menu screen illustrated in Fig. 6A, the screen shifts to a color accuracy verification condition registration screen illustrated in Fig. 6B. In addition, the control of these UI screens is performed by the UI control unit 402.

In display areas 603 to 605 in the color accuracy verification condition registration screen in Fig. 6B, when the user presses one of the areas 603 and 604, namely, color accuracy verification condition 1 and color accuracy verification condition 2, to be registered or edited, the screen shifts to a color accuracy verification condition detail registration screen illustrated in Fig. 6C.

Next, when the user presses a display area 607 (chart selection) in the color accuracy verification condition detail registration screen in Fig. 6C, the screen shifts to a chart selection screen illustrated Fig. 6D. The user selects a chart to be used for the color accuracy verification from display areas 611 to 614 on the chart selection screen illustrated in Fig. 6D.

"Chart 1 "and "Chart 2" in the display areas 611 and 612 on the chart selection screen in Fig. 6D are registered charts prescribed by a standard such as ISO standards.

The user presses a chart input button 615, and inputs various kinds of information required to register a custom chart. More specifically, the user inputs a name of the custom chart to be registered, the number of patches, patch sizes, and a sheet size/type, and then, uploads the image data. In this way, the registration is completed.

The chart image is generated according to a file format such as Tag Image File Format (TIFF), Portable Document Format (PDF), and Joint Photographic Experts Group (JPEG) format. In this way, the chart is registered in a display area 613 or 614 (unregistered) in the chart selection screen illustrated in Fig. 6D. In addition, a list of the registered charts, and chart configuration information for each chart are integrally referred to as "chart information".

In step S502, the color accuracy verification condition setting unit 401 acquires a list of the first printer 130a to the third printer 130c managed by the control apparatus 110, and information indicating a status (hereinbelow, referred to as "printer status information") of each printer. In this case, the printer status information includes information such as a power status (ON/OFF), a malfunction status, and a print job processing status (printing/waiting).

Assume that the printer status information is acquired by the control apparatus 110 periodically accessing the first printer 130a to the third printer 130c, and held by the control apparatus 110. In addition, the list of the printers and the printer status information for each printer are integrally referred to as "printer information".

Next, the color accuracy verification condition setting unit 401 receives a press of a "Printer selection" in a display area 608 in the color accuracy verification condition detail registration screen in Fig. 6C. Then, the screen shifts to a printer selection screen illustrated in Fig. 6E, and processing of receiving a selection of a printer to be a color accuracy verification target (hereinbelow, referred to as a "target printer") is performed.

More specifically, a user's selection is received via the UI screen displayed on the display unit 105 by the UI control unit 402, and the setting processing unit 407 sets the selected printer (first printer 130a) as a target printer.

Fig. 6E illustrates the printer selection screen used when a user selects a target printer.

Display areas 616 to 618 in the printer selection screen display the printers that can be processing targets (i.e., first printer 130a to third printer 130c) in a list form, according to the printer information acquired in step S502. At this time, for example, gray-out display processing is performed on an unusable state printer so that a user can recognize whether the printer is in a usable state or an unusable state, based on the printer status information.

On the printer selection screen in Fig. 6E, only the third printer 130c is grayed out to indicate that the third printer 130c is in an unusable state.

Next, the color accuracy verification condition setting unit 401 acquires a list of the first measurement apparatus 150a to the third measurement apparatus 150c managed by the control apparatus 110, specification information of each measurement apparatus, and information indicating a status of each measurement apparatus (hereinbelow, referred to as " measurement apparatus status information").

In this case, the specification information is information indicating the specification of each measurement apparatus, such as a processable sheet size, a processable smallest patch size, and the processable number of minimum/maximum patches for one sheet (1 page). In addition, for the measurement apparatus having an accessory attachable thereto, the specification information includes information about a specification difference depending on with or without the accessory.

Here, the accessory means, for example, a measurement ruler and an automatic document feeding unit. The measurement ruler is a device for assisting the slide movement at a measurement time that enables a stable color measurement in a handy type measurement apparatus.

A sensor mounted on the backside of the measurement apparatus can detect a stripe pattern on the measurement ruler to detect a direction (e.g., from left to right, or from right to left) in which a user is performing the measurement.

The automatic document feeding unit is an apparatus that enables continuous color measurements by automatically taking the charts printed out from the printer into the measurement apparatus.

The measurement apparatus status information includes information such as a power status (ON/OFF) and a connection status. Assume that the control apparatus 110 preliminarily or periodically accesses the first measurement apparatus 150a to the third measurement apparatus 150c to acquire the specification information and the measurement apparatus status information, and holds the acquired information.

In addition, a list of the measurement apparatuses, and the specification information and the measurement apparatus status information for each measurement apparatus are integrally referred to as "measurement apparatus information".

Next, the color accuracy verification condition setting unit 401 receives a press of a "Printer selection" in a display area 609 on the color accuracy verification condition detail registration screen in Fig. 6C. Then, the screen shifts to a measurement apparatus selection screen illustrated in Fig. 6F, and processing for receiving a selection of a measurement apparatus used for measuring the color values of the chart is performed.

More specifically, the color accuracy verification condition setting unit 401 receives the user's selection via the UI screen displayed on the display unit 105 by the UI control unit 402, and the setting processing unit 407 sets the selected measurement apparatus as a measurement apparatus used for the chart measurement.

Fig. 6F illustrates a measurement apparatus selection screen used when a user selects a measurement apparatus. In display areas 619 to 621 on the measurement apparatus selection screen, measurement apparatuses that can be processing targets (first measurement apparatus 150a to third measurement apparatus 150c) are listed according to the measurement apparatus information acquired in step S504.

In this case, based on the measurement apparatus status information, display processing of, for example, graying out the measurement apparatus in an unusable state so that it can be visually recognized whether the measurement apparatuses are in a usable state or an unusable state. On the measurement apparatus selection screen in Fig. 6F, only the second measurement apparatus 150b is grayed out to indicate that the second measurement apparatus 150b is in an unusable state.

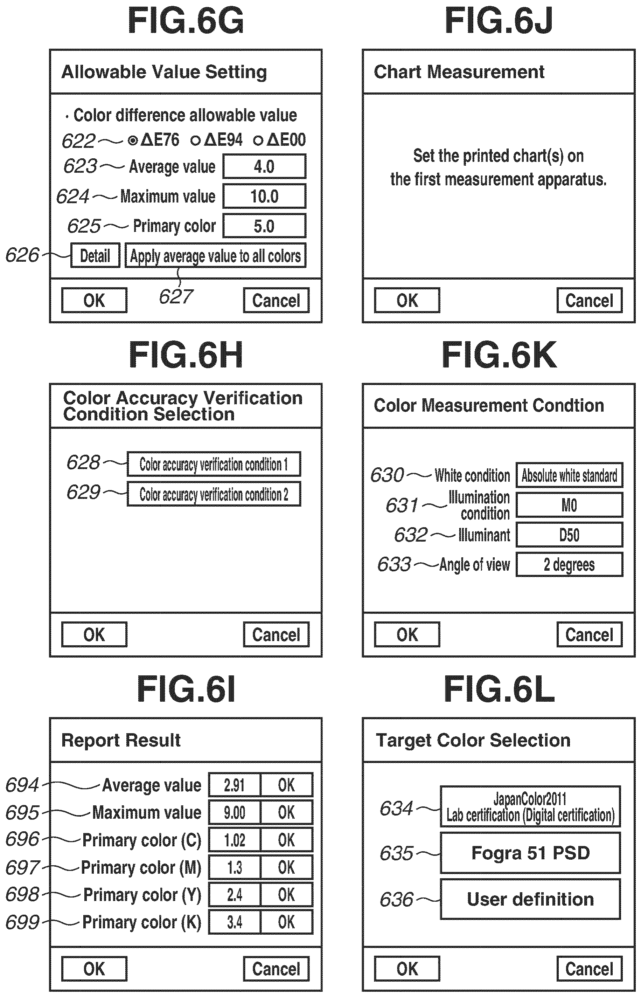

Next, the screen shifts to a color measurement condition input screen illustrated in Fig. 6K, and processing of receiving color measurement conditions used when a color measurement is performed is performed. More specifically, the color accuracy verification condition setting unit 401 receives a user's selection via the UI screen displayed on the display unit 105 by the UI control unit 402, and the setting processing unit 407 sets the color measurement conditions corresponding to the user's selection.

Fig. 6K illustrates the color measurement condition input screen used when a user inputs various kinds of color measurement conditions.

Examples of the color measurement conditions include a white condition 630, an illumination condition 631, an illuminant 632, and an angle of view 633, but the color measurement conditions are not limited thereto. As the white condition 630 includes a "paper whiteness standard" with a white background of the print paper as a reference, and an "absolute white standard" with a white standard plate (white tile) of a colorimeter as a standard, a user selects either one.

The illumination condition 631 includes selection options of "M0", "M1", "M2", and "M3" defined by ISO 13655, and a user selects one of them. The illuminant (observation light source) 632 is used for selecting a type of incorporated light source data when L*a*b* is calculated.

Examples of the types include "A", "D50", and "D65". The angle of view 633 relates to an angle of view (object size) when a person sees an object, and selected from "2 degree field of view", "10 degree field of view", and the like defined by ISO standards.

In addition, in a case where the color accuracy verification is performed according to JapanColor certification or Fogra certification compliant with ISO international standards, the color measurement conditions are defined in advance based on the type of the color certification. Accordingly, a user may be only required to register the type of the color certification, and the color accuracy verification condition setting unit 401 may automatically register the color measurement conditions therein depending on the type of the color certification.

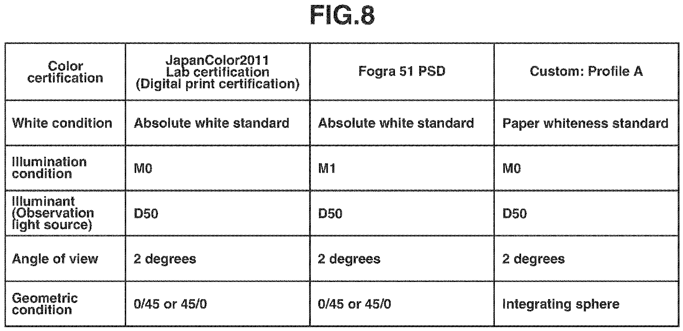

In this case, the color measurement conditions corresponding to the color certification are stored in advance as a table illustrated in Fig. 8, and the color accuracy verification condition setting unit 401 registers the color measurement conditions corresponding to the type of the color certification by referring to the table.

In addition, the color measurement conditions defined by a user or an operator who performs the color accuracy verification may be registered/deleted.

For example, an operator adds a color certification described as "Custom: Profile A" in Fig. 8 to the table in advance. Then, the color accuracy verification condition setting unit 401 may automatically register the color measurement conditions therein by the user who conducts the color accuracy verification selecting the "Custom: Profile A". In addition, in the present embodiment, since sometimes the usable color measurement conditions are different depending on the measurement apparatus, the color measurement conditions are registered after selecting the measurement apparatus, but "color measurement condition selection" menu may be provided on the screen in Fig. 6C, to register the measurement apparatus and the color measurement conditions.

Next, the color accuracy verification condition setting unit 401 receives a press of "Input allowable value" in a display area 610 on the color accuracy verification condition detail registration screen in Fig. 6C. Then, the screen shifts to an allowable value setting screen illustrated in Fig. 6G, and processing of receiving data such as allowable values or the like of the verification items for each patch in the used chart is performed.

More specifically, the user's selection is received via the UI screen displayed on the display unit 105 by the UI control unit 402, and the setting processing unit 407 sets the allowable values of the verification items corresponding to the user's selection.

Fig. 6G illustrates the allowable value setting screen used when a user sets the allowable values of the verification items. As the verification items, for example, an average value of color differences ΔE of the respective patches obtained by using a specified color difference expression, a maximum value in the color differences ΔE, and a color difference ΔE of the primary color (CMYK) are used, and the allowable values respectively corresponding to the verification items are set. Fig. 6G illustrates the color accuracy verification setting screen for setting the allowable values respectively corresponding to the verification items.

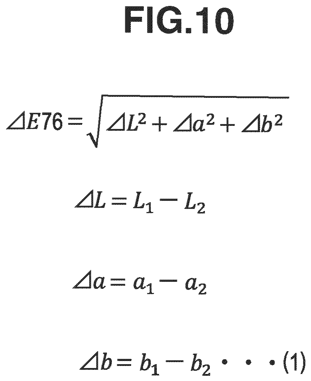

A user sets the allowable values respectively corresponding to the verification items in advance via such a UI screen. In Fig. 6G, a color difference ΔE76 is a rectilinear distance between the target color value in L*a*b* color space and a color value (colorimetric value) indicated by the colorimetric data, and it can be obtained, for example, using an expression (1) illustrated in Fig. 10

Assume that currently the allowable values of the color differences for the verification items are respectively set as illustrated in the color accuracy verification setting screen in Fig. 6G. In this case, if an average value of the color difference ΔE is within ±4.0, a maximum value of the color difference ΔE is within ±10.0, and the color difference ΔE (ΔE_primary color) of each of primary colors (CMYK) is within ±5.0 for each patch, it is determined that the color accuracy verification has passed (OK). Further, in a case where any of the verification items has exceeded the allowable value, it is determined that the color accuracy verification has failed (NG).

In Fig. 6G, by pressing an "Apply average value to all colors" button 627, the value input in an average 623 can be applied to all the colors configuring the chart.

In addition, similar to the color measurement conditions, in a case where the color accuracy verification is performed according to JapanColor certification or Fogra certification compliant with ISO international standards, the allowable values are defined depending on the type of the color certification. Thus, the user may be only required to register the type of the color certification, and the color accuracy verification condition setting unit 401 may automatically register the allowable value therein depending on the type of the color certification.

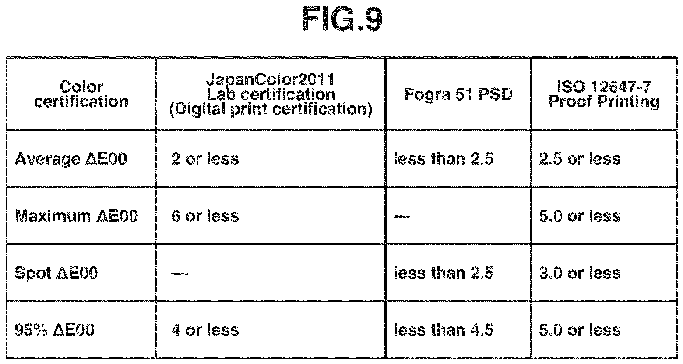

In this case, by storing in advance the allowable values corresponding to the color certification as a table illustrated in Fig. 9, the allowable values corresponding to the type of the color certification are registered by referring to the table.

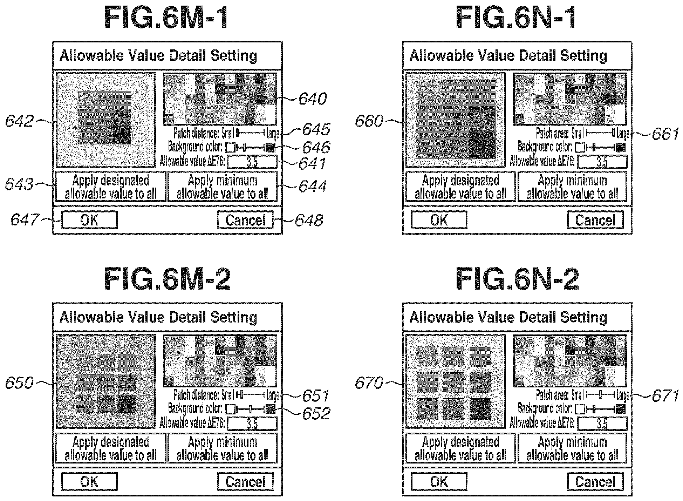

In addition, by pressing a detail button 626 in Fig. 6G, the screen shifts to an allowable value detail setting screen illustrated in Fig. 6M-1. Fig. 6M-1 illustrates the allowable value detail setting screen displayed when a user inputs the allowable values of the verification items for each patch (for each color).

Fig. 6M-1 includes a chart display area 640, an allowable value display/input area 641, an allowable range color difference confirmation area 642, an "Apply designated allowable value to all" button 643, and an "Apply minimum allowable value to all" button 644. Further, Fig. 6M-1 includes a patch distance adjustment slider 645, a background color adjustment slider 646, an OK button 647, and a Cancel button 648.

In step S501, the chart display area 640 displays all of or a part of the chart selected on the chart selection screen in Fig. 6D. Further, a patch can be selected from the chart displayed in the chart display area 640.

More specifically, the user's selection is received via the UI screen displayed on the display unit 105 by the UI control unit 402, and an average value of the color values of predetermined number of pixels in an area with the selected patch as a center is obtained as a patch color value.

The allowable value display/input area 641 displays an allowable value designated for the patch selected from the chart displayed in the chart display area 640, and serves as an input area for inputting an allowable value for the selected patch. More specifically, the allowable value display/input area 641 displays an allowable value designated for the color value acquired by operating the chart display area 640.

Further, the numerical value input by the user is received via the UI screen displayed on the display unit 105 by the UI control unit 402, and the color value and the input numerical value are stored in association with each other in the RAM 103, and the numerical value in the allowable value display/input area 641 is updated.

The color value separate from the color value acquired by the operation in the chart display area 640 by the allowable value displayed in the allowable value display/input area is calculated using an expression selected in the color difference expression selection 622. Then, the patch with the calculated color value is displayed near the patch with the color value acquired by the operation in the chart display area 640 on an achromatic background.

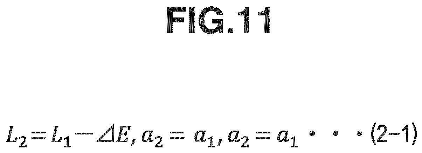

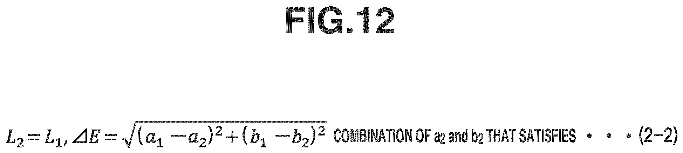

More specifically, the expression (1) is modified, and, for example, an expression (2-1) in Fig. 11 and an expression (2-2) in Fig. 12 are respectively applied to an expression regarding L that moves a value to a brightness direction, and an expression regarding "a" and "b" that moves a value in a color direction.

In the expression (1), each of L₁, a₁, and b₁ represents a color value acquired by the operation in the chart display area 640, ΔE represents an allowable value displayed in the allowable value display/input area, and each of L₂, a₂, and b₂ represents a color value separate from the designated color by an allowable value (predetermined value).

An "Apply designated allowable value to all" button 643 is a button to apply the allowable value currently displayed in the allowable value display/input area 641 to all the patch color values in the chart selected in the chart selection screen in Fig. 6D in step S501.

More specifically, when the "Apply designated allowable value to all" button 643 is pressed, the allowable value currently displayed in the allowable value display/input area 641 is overwritten and stored as the allowable value for all the color values in the color list stored in the RAM 103.

The "Apply minimum allowable value to all" button 644 is a button to apply the minimum allowable value having registered at a time of pressing it to all the color values of the patches in the chart.

More specifically, when the "Apply minimum allowable value to all" button 644 is pressed, a minimum value in the allowable values for all the color values in the color value list stored in the RAM 103 is acquired, and the acquired minimum value is overwritten and stored as the allowable value for all the color values in the color value list.

The patch distance adjustment slider 645 is a slider for adjusting the distance between two patches described below. One of the two patches is a patch with the color value acquired by the operation in the chart display area 640 displayed in the allowable range color difference confirmation area 642. The other patch is a patch with the color value separate from the acquired patch by the allowable value displayed in the allowable value display/input area, calculated using an expression selected in the color difference expression selection 622.

In Fig. 6M-1, when a user slides the patch distance adjustment slider 645 to a "Large" direction, for example, as illustrated in an allowable range color difference confirmation area 650 in Fig. 6M-2, the distance between patches is displayed in a separate manner.

The background color adjustment slider 646 is a slider for adjusting the brightness of the achromatic background in the allowable range color difference confirmation area 642.

For example, when a user slides the background color adjustment slider 646 to the right (black) direction, as illustrated in the allowable range color difference confirmation area 650 in Fig. 6M-2, the background becomes darker than the background of the allowable range color difference confirmation area 642.

The OK button 647 is a button for enabling the allowable value set for each patch. More specifically, when the OK button 647 is pressed, the list of the color values and the allowable values corresponding thereto stored in the RAM 103 is stored into the HDD 104 as allowable values of the color accuracy verification specification selected on the color accuracy verification condition registration screen in Fig. 6B, and the screen returns to the allowable value setting screen in Fig. 6G.

At this time, an average value of the updated allowable values is calculated and displayed in the average 623, the updated maximum allowable value is displayed in a maximum value 624, and the maximum allowable value set for the primary color is displayed in a primary color 625.

The Cancel button 648 is a button for discarding the allowable value input by operating the allowable value detail setting screen illustrated in Fig. 6M-1, and returning the screen to the allowable value setting screen in Fig. 6G.

In addition, the patch distance adjustment slider 645 on the allowable value detail setting screen in Fig. 6M-1 may be, for example, a patch area slider 661 for changing the patch areas illustrated in Fig. 6N-1. In this case, the adjustment result can be displayed as illustrated in an allowable range color difference confirmation area 670 in Fig. 6N-2. More specifically, when a user operates the patch area slider 661, the following two patch sizes can be changed.

One of the patches is a patch with the color value acquired by the operation of the chart display area 640 displayed in the allowable range color difference confirmation area 642. The other patch is a patch with the color value separate from the acquired patch by the allowable value displayed in the allowable value display/input area 641, calculated using an expression selected by the color difference expression selection 622.

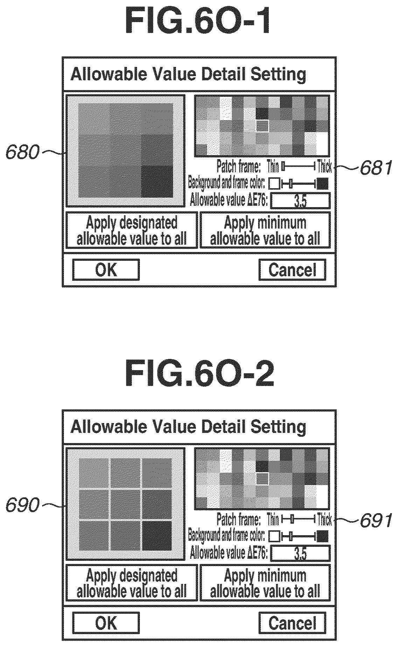

Further, the patch distance adjustment slider 645 in the allowable value detail setting screen in Fig. 6M-1 may be, for example, a patch frame slider 681 in Fig. 6O-1. In this case, the adjustment result can be displayed as illustrated in an allowable range color difference confirmation area 690 in Fig. 6O-2. More specifically, when a user operates the patch frame slider 681, it is possible to display a frame surrounding each of the following two patches with the width of the frame changed.

One of the two patches is a patch with the color value acquired by the operation in the chart display area 640 displayed in the allowable range color difference confirmation area 642. The other patch is a patch with the color value separate from the acquired patch by the allowable value displayed in the allowable value display/input area 641, calculated using an expression selected by the color difference expression selection 622.

In the example in Fig. 6O-2, the color of each frame surrounding the patch is the same as the color of the background of the allowable range color difference confirmation area 690, but it is not limited thereto.

Next, the color accuracy verification condition setting unit 401 receives a press of "Input target value" in a display area 606 on the color accuracy verification condition detail registration screen in Fig. 6C. Then, the screen shifts to a target color selection screen illustrated in Fig. 6L, and processing of receiving the target values for each patch in the used chart is performed.

More specifically, the user's selection is received via the UI screen displayed on the display unit 105 by the UI control unit 402, and the setting processing unit 407 sets the target color value corresponding to the user's selection. Fig. 6L illustrates the target color selection screen displayed when a user inputs a target value.

In the present embodiment, since a color accuracy verification example according to JapanColor certification 634 or Fogra certification 635 compliant with ISO standards is described, the target value is determined depending on the type of the color certification. Thus, the user may only be required to register the type of the color certification, and the color accuracy verification condition setting unit 401 may automatically register the allowable value therein depending on the type of the color certification.

In this case, the target value corresponding to the color certification is stored in the HDD 104 in advance, and the target value corresponding to the type of the color certification is registered by referring to the data.

In step S503, the measurement job generation unit 403 starts the color accuracy verification based on the user's input. When the user who wants to start the color accuracy verification presses a color accuracy verification button 602 on the main menu screen illustrated in Fig. 6A, the screen shifts to a color accuracy verification condition selection screen illustrated in Fig. 6H.

In addition, the UI control unit 402 controls these UI screens.

In step S504, when the user presses a "Color accuracy verification condition 1" in the display area 628 or a "Color accuracy verification condition 2" in the display area 629 in the color accuracy verification condition selection screen in Fig. 6H, the measurement job generation unit 403 performs processing of generating the corresponding measurement job.

In addition, by selecting a plurality of color accuracy verification conditions, a plurality of measurement jobs can be generated. When the measurement jobs are generated, the printer to be a color accuracy verification target, the measurement apparatus and the color measurement conditions to be used, and the chart and the allowable values to be used for the color accuracy verification registered in the processing in steps S501 to S503 are uniquely determined.

In step S505, the control apparatus 110 transmits the plurality of chart print jobs to the target printer based on the received image data. At this time, the target printer performs color conversion of the received image data based on an input profile and an output profile.

The input profile and the output profile are determined in advance based on the color accuracy verification condition selected in step S504.

For example, in a case where the color accuracy verification according to JapanColor2011Lab certification is performed, a profile generated based on Japan Color2011 is set as the input profile, and the output profile generated by the target printer is set as the output profile.

JapanColor2011Lab certification is a digital certification.

Thus, a color conversion for JapanColor2011Lab certification (digital certification) can be applied to the image data.

In step S506, the first printer 130a that has received the print job performs print processing based on the print job, and outputs the charts.

In step S507, the control apparatus 110 displays a chart measurement screen illustrated in Fig. 6J, and instructs the color measurement of the plurality of charts printed out from the target printer.

In step S508, when the user sets the plurality of charts and instructs a measurement start, the selected measurement apparatus (here) measures color values on each chart.

In step S509, after the measurement is complete, the selected measurement apparatus stores the obtained colorimetric data, and transmits it to the control apparatus 110.

In step S510, the control apparatus 110 receives the colorimetric data from the selected measurement apparatus, and transfers the data to the color accuracy verification apparatus 100.

In step S511, the verification processing unit 406 performs verification processing to verify the color accuracy of the printer using the data.

In step S512, the UI control unit 402 displays the verification result on the display unit 105. Fig. 6I illustrates a report result screen displaying the verification result. As illustrated in Fig. 6I, an average value of a color difference for each patch, a maximum value, and a color difference for each primary color (CMYK) are displayed, and in addition a verification result of pass/fail (OK/NG) for each verification item is displayed.

With such a report result screen, a user can understand the color fluctuation state of the target printer. Then, in a case where the verification result is fail (NG), the color fluctuation of the printer can be suppressed within the prescribed limit by regenerating a print profile, or performing a correction operation using a color correction function of the printer.

Above described is the overall processing flow in the color accuracy verification system according to the present embodiment. In addition, together with the display for prompting the user to perform the color measurement of the chart, the control apparatus 110 may provide a preparation instruction to the selected measurement apparatus to perform calibration before starting the color measurement.

### <Allowable Value Detail Setting>

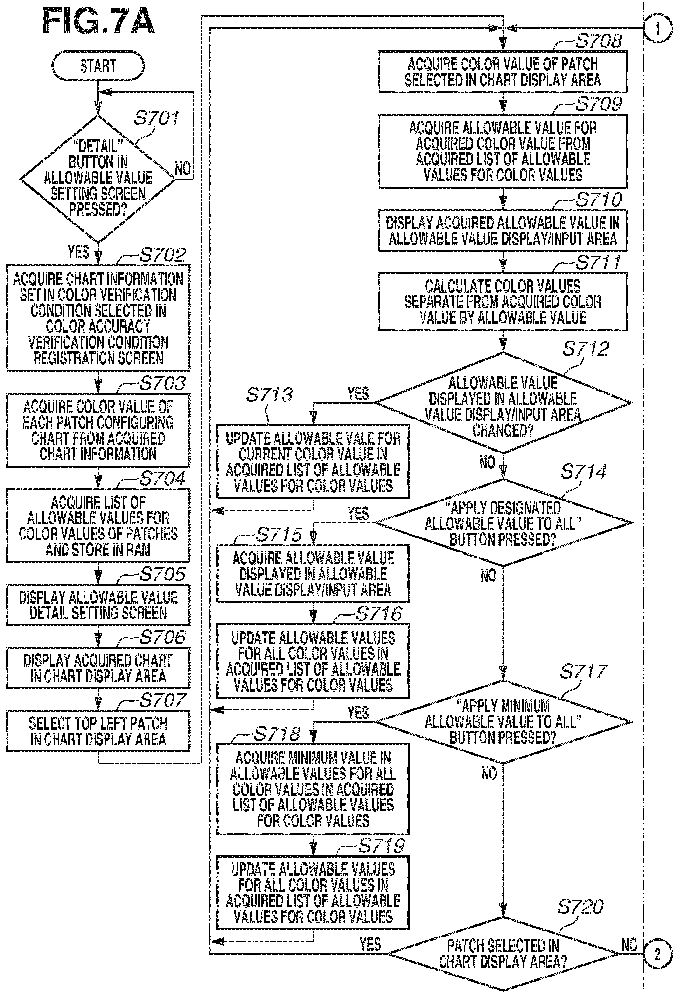

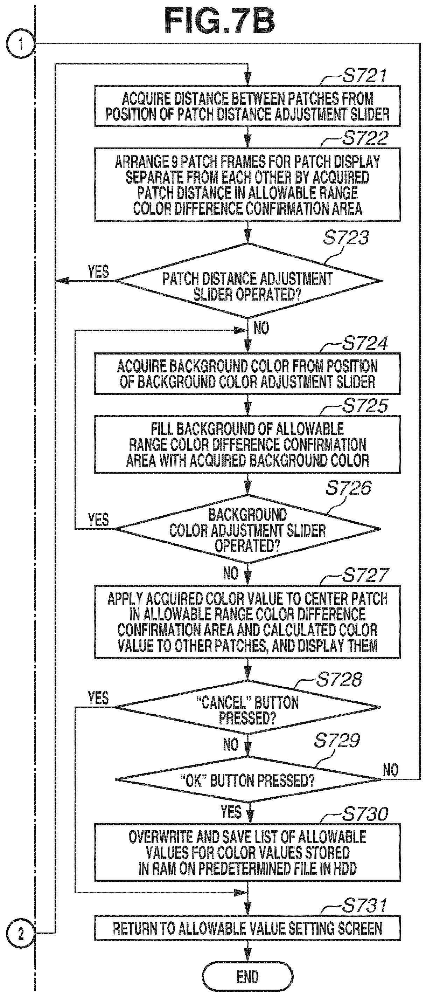

Next, with reference to Fig. 7, a specific flow of the allowable value detail setting performed in step S502 will be described. More specifically, in the flowchart in Fig. 7, a flow of setting the allowable value for the color value of each patch configuring the chart will be described.

The series of the processing illustrated in the flowchart in Fig. 7 is implemented by the CPU 101 of the color accuracy verification apparatus 100 loading a program corresponding to the allowable value detail setting unit 404 to the RAM 103 from the ROM 102, and executing the loaded program.

In step S701, the allowable value detail setting unit 404 checks whether the detail button 626 is pressed in the allowable value setting screen in Fig. 6G. In a case where the detail button 626 is not pressed (NO in step S701), the processing in step 701 is repeated. On the other hand, in a case where the detail button 626 is pressed (YES in step S701), the processing proceeds to step S702.

In step S702, the allowable value detail setting unit 404 acquires the chart information selected in step S501, and the processing proceeds to step S703.

In step S703, the allowable value detail setting unit 404 acquires a color value of each of the patches configuring the chart from the chart information acquired in step S702, and the processing proceeds to step S704.

In step S704, the allowable value detail setting unit 404 acquires a list of the allowable values for the color values of respective patches acquired in step S703 from the HDD 104 of the color accuracy verification apparatus 100, stores the list in the RAM 103, and then the processing proceeds to step S705.

In step S705, the allowable value detail setting unit 404 displays the allowable value detail setting screen in Fig. 6M-1 on the display unit 105 via the UI control unit 402, and the processing proceeds to step S706.

In step S706, the allowable value detail setting unit 404 displays all of or a part of the chart in the chart display area 640 on the allowable value detail setting screen in Fig. 6M-1, and the processing proceeds to step S707. At this time, in a case where the area of the chart is large, a part of the chart may be displayed, and able to be scrolled.

In step S707, the allowable value detail setting unit 404 automatically selects a top left patch in the chart, and the processing proceeds to step S708.

In step S708, the allowable value detail setting unit 404 acquires the color value of the patch selected in the chart display area 640, and then the processing proceeds to step S709. At this time, the color value may be obtained from an average of the values of the pixels located within a range corresponding to several pixels with the pixel at the selected position as a center in the chart image displayed in the chart display area 640.

Further, the allowable value detail setting unit 404 may have in advance a list of the color values for respective pieces of the position information of the chart image, and may acquire the color value from the selected position information.

In step S709, the allowable value detail setting unit 404 acquires the allowable value corresponding to the color value acquired in step S708 from the list of the allowable values for the color values of respective patches acquired in step S704, and the processing proceeds to step S710.

In step S710, the allowable value detail setting unit 404 displays the allowable value acquired in step S709 in the allowable value display/input area 641 on the allowable value detail setting screen in Fig. 6M-1, and then the processing proceeds to step S711.

In step S711, the allowable value detail setting unit 404 calculates one or more colors with color values separate from the color value acquired in step S708 by the allowable value acquired in step S709, and then the processing proceeds to step S712. In step S711, in a case where ΔE76 is selected in the color difference expression selection 622 on the allowable value setting screen in Fig. 6G, the allowable value is 3.0, and 8 separate colors are calculated as follows.

For example, in a case where the color value acquired in step S708 is (L, a, b) = (53, 111, 67), an expression (2-1) is used for the color moved to each of the light and dark directions in the brightness direction by 3.0. As a result, (L, a, b) = (56, 111, 67), and (L, a, b) = (50, 111, 67) are obtained.

Further, in a case where the color value is fixed in the "b" direction, and moved in the "a" direction, (L, a, b) = (53, 114, 67), and (L, a, b) = (53, 108, 67) are obtained using an expression (2-2).

Next, in a case where the color value is fixed in the "a" direction, and moved in the "b" direction, (L, a, b) = (50, 111, 70) and (L, a, b) = (50, 111, 64) are obtained using the expression (2-2).

Further, (L, a, b) = (53, 113, 65), (L, a, b) = (53, 109, 65) are calculated using the expression (2-2) while moving both "a" and "b". Then, for example, a color conversion from Lab to sRGB is performed and stored.

In step S712, in a case where the allowable value in the allowable value display/input area 641 is changed (YES in step S712), the processing proceeds to step S713. On the other hand, in a case where the allowable value in the allowable value display/input area 641 is not changed (NO in step S712), the processing proceeds to step S714.

In step S713, the allowable value detail setting unit 404 rewrites the allowable value corresponding to the color value acquired in step S708 in the list of the allowable values for the respective color values of the patches acquired in step S703, with the allowable value changed in step S712. Then, the processing advances to step S708 to repeat this processing.

In step S714, in a case where a the "Apply designated allowable value to all" button 643 is pressed (YES in step S714), the processing proceeds to step S715. On the other hand, the "Apply designated allowable value to all" button 643 is not pressed (NO in step S714), the processing proceeds to step S717.

In step S715, the allowable value detail setting unit 404 acquires the allowable value in the allowable value display/input area 641, and the processing proceeds to step S716.

In step S716, the allowable value detail setting unit 404 overwrites the allowable values for all the color values in the list of the allowable values for color values of patches acquired in step S703 with the allowable values acquired in step S715, and the processing proceeds to step S708. Then, the allowable value detail setting unit 404 repeat this processing.

In step S717, in a case where the "Apply minimum allowable value to all" button 644 is pressed (YES in step S717), the processing proceeds to step S718. On the other hand, the "Apply minimum allowable value to all" button 644 is not pressed (NO in step S717), the processing proceeds to step S720.

In step S718, the allowable value detail setting unit 404 acquires the minimum value from among all the allowable values in the list of the allowable values for the color values of the patches acquired in step S703, and the processing proceeds to step S719.

In step S719, the allowable value detail setting unit 404 overwrites the allowable values for all the color values in the list of the allowable values for the color values of the respective patches acquired in step S703, with the minimum allowable value acquired in step S718. Then, the processing advances to step S708 to repeat this processing.

In step S720, in a case where a patch is selected in the chart display area 640 (YES in step S720), the processing advances to step S708 to repeat this processing. On the other hand, in a case where the chart display area 640 is not operated (NO in step S720), the processing proceeds to step S721.

In step S721, the allowable value detail setting unit 404 acquires the distance between patches from the position of the patch distance adjustment slider 645, and the processing proceeds to step S722.

In step S722, the allowable value detail setting unit 404 arranges the 8 patches so as to be separated from a fixed center patch by the patch distance acquired in step S721, and displays the patches in the allowable range color difference confirmation area 642. Then, the processing proceeds to step S723.

In step S723, in a case where the patch distance adjustment slider 645 is operated (YES in step S723), the processing advances to step S721 to repeat this processing. On the other hand, in a case where the patch distance adjustment slider 645 is not operated (NO in step S723), the processing proceeds to step S724.

In step S724, the allowable value detail setting unit 404 acquires the background color from the position of the background color adjustment slider 646, and the processing proceeds to step S725.

In step S725, the allowable value detail setting unit 404 fills the background of the allowable range color difference confirmation area 642 with the background color acquired in step S724, and the processing proceeds to step S726.

In step S726, in a case where the background color adjustment slider 646 is operated (YES in step S726), the processing advances to step S724 to repeat this processing. On the other hand, in a case where the background color adjustment slider 646 is not operated (NO in step S726), the processing proceeds to step S727.

In step S727, the allowable value detail setting unit 404 fills the center patch in the allowable range color difference confirmation area 642 with the color value acquired in step S708, and fills the 8 patches other than the center patch with the color values calculated in step S711. Then, the processing proceeds to step S728.

In step S728, in a case where the Cancel button 648 is pressed (YES in step S728), the processing proceeds to step S731. On the other hand, in a case where the Cancel button 648 is not pressed (NO in step S728), the processing proceeds to step S729.

In step S729, in a case where the OK button 647 is pressed (YES in step S729), the processing proceeds to step S730. On the other hand, in a case where the OK button 647 is not pressed (NO in step S729), the processing proceeds to step S708 to repeat this processing.

In step S730, the allowable value detail setting unit 404 overwrites the list of the allowable values for the respective color values of the patches stored in the RAM 103 on the list of the allowable values for the color values of the respective patches, associated with the color accuracy verification conditions selected in the color accuracy verification condition registration screen in Fig. 6B stored in the HDD 104, and stores the overwritten list. Then, the processing proceeds to step S731.

In step S731, the allowable value detail setting unit 404 returns the screen to the allowable value setting screen in Fig. 6G, and ends the processing.

According to the present embodiment, the flow of setting the allowable value for the color value of each patch while displaying the plurality of colors when the color is deviated to the maximum value of the allowable value is described. In this way, when a user determines an allowable value, since the user can determine while confirming how much the color is allowed to change from the original color, the user can set the allowable value without having a high level of skill or knowledge.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

### Clauses

1. A program for performing color verification of a color printed by a printing apparatus, the program causing a computer to execute,
   receiving a designation of a first color, as a first receiving;
   receiving an allowable color difference for the color verification, as a second receiving; and
   displaying a second color having the allowable color difference on display means with the first color with the designation thereof received in the first receiving being as a reference, based on the first color with the designation thereof received in the first receiving and the allowable color difference received in the second receiving.
2. The program according to clause 1, wherein the first color and the second color are displayed side by side in the displaying.
3. The program according to clause 1 or 2, wherein the color verification is performed using a printed product output by the printing apparatus.
4. The program according to clause 3, wherein the printed product output by the printing apparatus is a chart including a color patch, and the color verification is performed based on a color measurement result of the color patch.
5. The program according to any one of clauses 1 to 4, the program further causing the computer to execute calculating a color value of the second color using a color value of the first color, the allowable color difference, and a color difference expression.
6. The program according to clause 5, the program further causing the computer to execute selecting any of a plurality of color difference expressions based on a user's operation,
   wherein, in the calculating, the color value of the second color is calculated using the color value of the first color, the allowable color difference, and the color difference expression selected in the selecting.
7. The program according to any one of clauses 1 to 6, the program further causing the computer to execute presenting a plurality of colors included in the chart output by the printing apparatus,
   wherein, in the first receiving, the designation of the first color is received by selecting the first color from among the plurality of colors presented in the presenting.
8. A control method for performing color verification of a color printed by a printing apparatus, the control method comprising:
   receiving a designation of a first color, as a first receiving;
   receiving an allowable color difference for the color verification, as a second receiving; and
   displaying a second color having the allowable color difference on a display means with the first color with the designation thereof received in the first receiving being as a reference, based on the first color with the designation thereof received in the first receiving and the allowable color difference received in the second receiving.
9. An information processing apparatus configured to perform color verification of a color printed by a printing apparatus, the information processing apparatus comprising:
   first reception means for receiving a designation of a first color;
   second reception means for receiving an allowable color difference for the color verification; and
   display means for displaying a second color having the allowable color difference with the first color with the designation thereof received by the first reception means being as a reference, based on the first color with the designation thereof received by the first reception means and the allowable color difference received by the second reception means.

## Claims

1. A control method for performing color verification of a color printed by a printing apparatus (130a-c), the control method comprising:
receiving (S501) a designation of a first color;
receiving (S502) an allowable color difference for the color verification; and
displaying (S512) a second color having the allowable color difference on display means (105) with the first color with the designation thereof received being as a reference, based on the first color and the allowable color difference.

2. The control method according to claim 1, wherein the first color and the second color are displayed side by side on the display means (105).

3. The control method according to claim 1 or 2, wherein the color verification is performed using a printed product output by the printing apparatus (130a-c).

4. The control method according to claim 3, wherein the printed product output by the printing apparatus (130a-c) is a chart including a color patch, and the color verification is performed based on a color measurement result of the color patch.

5. The control method according to any one of claims 1 to 4, further comprising calculating a color value of the second color using a color value of the first color, the allowable color difference, and a color difference expression.

6. The control method according to claim 5, further comprising selecting, based on a user's operation, any color difference expression of a plurality of color difference expressions,
wherein, in the calculating, the color value of the second color is calculated using the color value of the first color, the allowable color difference, and the selected color difference expression.

7. The control method according to claim 4 or any one of claims 5 and 6 in combination with claim 4, further comprising presenting a plurality of colors included in the chart output by the printing apparatus (130a-c),
wherein the designation of the first color is received by selecting the first color from among the plurality of colors presented in the presenting.

8. A computer program comprising instructions which, when the program is executed by a computer, cause the computer to carry out the method of any one of claims 1 to 7.

9. A computer-readable storage medium having stored thereon the computer program of claim 8.

10. An information processing apparatus (100, 110) configured to perform color verification of a color printed by a printing apparatus (130a-c), the information processing apparatus comprising:
first reception means (401) for receiving a designation of a first color;
second reception means (404) for receiving an allowable color difference for the color verification; and
display means (105) for displaying a second color having the allowable color difference with the first color with the designation thereof received by the first reception means being as a reference, based on the first color with the designation thereof received by the first reception means and the allowable color difference received by the second reception means.

11. The information processing apparatus (100, 110) according to claim 10, wherein the display means (105) is configured to display the first color and the second color side by side.

12. The information processing apparatus (100, 110) according to claim 10 or 11, wherein the information processing apparatus is configured to perform color verification using a printed product output by the printing apparatus (130a-c), wherein the printed product output by the printing apparatus (130a-c) is a chart including a color patch, and the color verification is performed based on a color measurement result of the color patch.

13. The information processing apparatus (100, 110) according to any one of claims 10 to 12, further comprising calculating means configured to calculate a color value of the second color using a color value of the first color, the allowable color difference, and a color difference expression.

14. The information processing apparatus (100, 110) according to claim 13, further comprising selecting means configured to select, based on a user's operation, any color difference expression of a plurality of color difference expressions,
wherein the calculating means is configured to calculate the color value of the second color using the color value of the first color, the allowable color difference, and the selected color difference expression.

15. The information processing apparatus (100, 110) according to claim 12 or any one of claims 13 and 14 in combination with claim 12, further comprising presenting a plurality of colors included in the chart output by the printing apparatus (130a-c),
wherein the first reception means is configured to receive the designation of the first color by selecting the first color from among a plurality of colors included in the chart output by the printing apparatus (130a-c).
